# EUROPÄISCHE PATENTANMELDUNG

(11) **EP 1 291 240 A2**
(43) Veröffentlichungstag der Anmeldung: **12.03.2003**
(21) Anmeldenummer: 02019508.7
(22) Anmeldetag: 31.08.2002
(51) Int. Cl.: B60Q 1/00

(54) **Fahrzeugscheinwerfer**

(30) Priorität: 07.09.2001 DE 10144000
(71) Anmelder: Hella KG Hueck & Co., 59552 Lippstadt (DE)
(72) Erfinder: Mügge, Martin, 59590 Geseke (DE)

(57) **Zusammenfassung**

Die Erfindung betrifft einen Fahrzeugscheinwerfer mit einem Gehäuse, einer das Gehäuse abdeckenden lichtdurchlässigen Abschlussscheibe (38), zumindest einem in dem Gehäuse angeordneten Reflektor für Fahrlicht, zumindest einem zweiten in dem Gehäuse angeordneten Reflektor (12) für Blinklicht, zumindest einem dritten in dem Gehäuse angeordneten Reflektor (14) für Positionslicht, den Reflektoren jeweils zugeordneten Lichtquellen (16,18) und einem die Reflektoren in Abstrahlrichtung umgebenden rahmenartigen Abdeckteil (10), welches erfindungsgemäß mehrere Bereiche mit unterschiedlichem Reflexionsgrad aufweist, von denen die größeren Bereiche (20) eine Oberfläche mit einem niedrigen Reflexionsgrad und die kleineren Bereiche (22), von denen zumindest ein erster kleinerer Bereich (24) lichttechnisch der Lichtquelle (16) für Blinklicht und zumindest ein zweiter kleinerer Bereich (26) lichttechnisch der Lichtquelle (18) für Positionslicht zugeordnet ist und die das von den jeweiligen Lichtquellen (16,18) auf sie auftreffende Licht in Richtungen umlenken, die in einem großen Winkel im Bezug auf die Hauptabstrahlrichtungen (HR) der Reflektoren (12,14) liegen, eine Oberfläche mit einem hohen Reflexionsgrad aufweisen.

## Beschreibung

Die Erfindung betrifft einen Fahrzeugscheinwerfer mit einem Gehäuse, einer das Gehäuse abdeckenden lichtdurchlässigen Abschlussscheibe, zumindest einem in dem Gehäuse angeordneten Reflektor für Fahrlicht, zumindest einem zweiten in dem Gehäuse angeordneten Reflektor für Blinklicht, zumindest einem dritten in dem Gehäuse angeordneten Reflektor für Positionslicht, den Reflektoren jeweils zugeordneten Lichtquellen und einem die Reflektoren in Abstrahlrichtung umgebenden rahmenartigen Abdeckteil.

Aus der DE 198 24 053 A1 ist ein Fahrzeugscheinwerfer bekannt, in dessen durch ein Gehäuse und einer das Gehäuse abdeckenden, lichtdurchlässigen Abschlussscheibe gebildeten Innenraum ein erster Reflektor für Fahrlicht und oberhalb dieses ersten Reflektors ein zweiter Reflektor für Blinklicht angeordnet ist. Die Reflektoren sind schalenförmig ausgeführt und verlaufen mit den sich benachbarten Rändern äquidistant zueinander. Zwischen den Reflektoren und der Abschlussscheibe ist ein rahmenartiges Abdeckteil angeordnet, welches einen beide Reflektoren umgebenden Ringabschnitt, einen zwischen beiden Reflektoren verlaufenden Steg und eine hochglänzende, silberfarbene Oberflächenbeschichtung aufweist. Da der Reflektor für Blinklicht in Abstrahlrichtung sehr weit hinten angeordnet ist, fällt kein direkt von der in dem Reflektor angeordneten Lichtquelle abgestrahltes Licht und auch kein von dem Reflektor reflektiertes Licht in die seitlichen Winkelbereiche der gesetzlich vorgeschriebenen Abstrahlcharakteristik. Direkt von der Lichtquelle als Streulicht auf die hochglänzende, silberfarbene Oberflächenbeschichtung des Abdeckrahmens auftreffende Lichtstrahlen werden so reflektiert, dass sie die geforderten seitlichen Lichtstärken erfüllen. Aus optischen Gründen wird jedoch bei modernen Fahrzeugscheinwerfern immer öfter gefordert, dass ein in dem Scheinwerfer angeordnetes Abdeckteil keine hochglänzende, silberfarbene Oberflächenbeschichtung, sondern eine Oberfläche mit einem niedrigen Reflexionsgrad insbesondere eine schwarze Oberflächenbeschichtung aufweist, so dass der Scheinwerfer im ausgeschalteten Zustand einen visuell dunklen Gesamteindruck macht. Diese Oberfläche des rahmenartigen Abdeckteils mit einem niedrigen Reflexionsgrad reflektiert jedoch nicht mehr die von der Lichtquelle auf sie auftreffenden Lichtstrahlen, so dass die gesetzlich vorgeschriebenen Lichtwerte bei einem derartigen Scheinwerfer nicht erfüllt würden.

Der Erfindung liegt daher, ausgehend von dem eingangs erläuterten Stand der Technik, die Aufgabe zugrunde, einen Fahrzeugscheinwerfer derart weiterzubilden, dass er, obwohl er ein rahmenartiges Abdeckteil mit einer Oberfläche mit niedrigem Reflexionsgrad aufweist, die in den seitlichen Winkelbereichen gesetzlich vorgeschriebenen Lichtwerte erfüllt.

Diese Aufgabe wird erfindungsgemäß in Verbindung mit dem Oberbegriff des Anspruchs 1 dadurch gelöst, dass das rahmenartige Abdeckteil mehrere Bereiche mit unterschiedlichem Reflexionsgrad aufweist, von denen die größeren Bereiche eine Oberfläche mit einem niedrigen Reflexionsgrad und die kleineren Bereiche, von denen zumindest ein erster kleinerer Bereich lichttechnisch der Lichtquelle für Blinklicht und zumindest ein zweiter kleinerer Bereich lichttechnisch der Lichtquelle für Positionslicht zugeordnet ist und die das von den jeweiligen Lichtquellen auf sie auftreffende Licht in Richtungen umlenken, die in einem großen Winkel im Bezug auf die Hauptabstrahlrichtungen der Reflektoreri liegen, eine Oberfläche mit einem hohen Reflexionsgrad aufweisen. Ein derartiger Fahrzeugscheinwerfer erfüllt vorteilhaft die gesetzlich vorgeschriebene Lichtverteilung auch in den seitlichen Winkelbereichen, ohne auf das aus Designgründen geforderte Merkmal, eines Abdeckrahmens mit einer Oberfläche mit einem niedrigen Reflexionsgrad um im ausgeschalteten Zustand einen visuell dunklen Gesamteindruck zu haben, zu verzichten.

Bei einer vorteilhaften Ausgestaltung der Erfindung weist der erste und/oder der zweite kleinere Bereich des rahmenartigen Abdeckteils optische Elemente wie z.B. Prismen oder dergleichen auf, um das gesamte von den jeweiligen Lichtquellen auf die Bereiche auftreffende Licht optimal umzulenken und so den lichttechnischen Wirkungsgrad des Fahrzeugscheinwerfers zu erhöhen.

Zweckmäßigerweise ist der erste und der zweite kleinere Bereich an einer zur Fahrzeugsymmetrieebene liegenden Seitenfläche des rahmenartigen Abdeckteils angeordnet, wodurch die Bereiche nicht die Lichtverteilung der einzelnen Lichtfunktionen stören und das rahmenartige Abdeckteil kostengünstig als Kunststoffspritzgussteil ohne teure Schieber in dem Spritzgießwerkzeug hergestellt werden kann.

Um sicherzustellen, dass der erste kleinere Bereich lediglich das Licht der Lichtquelle für Blinklicht und der zweiten kleinere Bereich lediglich das Licht von der Lichtquelle für Positionslicht umlenkt, ist bei einer vorteilhaften Ausführungsform der Erfindung der zweite kleinere Bereich zwischen dem ersten kleineren Bereich und der Abschlussscheibe und gegenüber dem ersten kleineren Bereich in Richtung der Fahrzeugsymmetrieebene versetzt an dem rahmenartigen Abdeckteil angeordnet.

Vorteilhaft ist die Lichtquelle für Positionslicht in einer Ebene zwischen der Abschlussscheibe und der Lichtquelle für Blinklicht, sowie versetzt in Richtung einer Seitenfläche des rahmenartigen Abdeckteils angeordnet, wodurch die Sicherheit, dass der erste kleinere Bereich lediglich das Licht der Lichtquelle für Blinklicht und der zweiten kleinere Bereich lediglich das Licht von der Lichtquelle für Positionslicht umlenkt, noch erhöht wird.

Da die Lichtquelle für Positionslicht lediglich einen kleinen Reflektor benötigt um die gesetzlichen Lichtwerte zu erfüllen, ist bei einer zweckmäßigen Ausführungsform der Erfindung die Lichtquelle für Positionslicht in einer den Reflektor für Positionslicht bildenden Ausnehmung des rahmenartigen Abdeckteils angeordnet, welche ebenfalls eine Oberfläche mit einem hohen Reflexionsgrad aufweist. Somit kann kostengünstig auf die Anordnung eines zusätzlichen Reflektors in dem Gehäuse des Fahrzeugscheinwerfers versichtet werden.

Eine weitere zweckmäßige Ausgestaltung der Erfindung ist dadurch gekennzeichnet, dass die Oberfläche der größeren Bereiche des rahmenartigen Abdeckteils schwarz und die Oberfläche der kleineren Bereiche hochglanzbedampft ausgeführt ist.

Die Herstellung des rahmenartigen Abdeckteils wird bei einer vorteilhaften Ausführungsform der Erfindung dadurch wesentlich vereinfacht, dass das rahmenartige Abdeckteil mehrteilig ausgeführt ist. Dieser Vorteil zeigt sich insbesondere bei einer Ausgestaltung des rahmenartigen Abdeckteils, bei der die einen unterschiedlichen Reflexionsgrad aufweisenden Bereiche des rahmenartigen Abdeckteils miteinander verbindbare Einzelteile sind. Hierbei können die als Kunststoffspritzgussteil hergestellten Einzelteile entsprechend ihrer gewünschten Oberflächenbeschaffenheit behandelt und nach den entsprechenden Lakkier- und/oder Bedampfungsprozessen miteinander verbunden werden. Da die Bereiche mit unterschiedlicher Oberflächenbehandlung nicht gegenseitig abgedeckt werden müssen während die jeweils anderen Bereiche behandelt werden ist somit eine schnellere und kostengünstigere Herstellung gewährleistet.

Eine vorteilhafte Ausführungsform der Erfindung ist anhand der Figuren erläutert. Es zeigen:
- Figur 1:: eine perspektivische Vorderansicht eines Fahrzeugscheinwerfers,
- Figur 2:: die vereinfachte geschnittene Draufsicht gemäß der Linie X-X von Figur 1 mit schematisch dargestellten Strahlengängen für Blinklicht und
- Figur 3:: die vereinfachte geschnittene Draufsicht gemäß der Linie X-X von Figur 1 mit schematisch dargestellten Strahlengängen für Positionslicht.

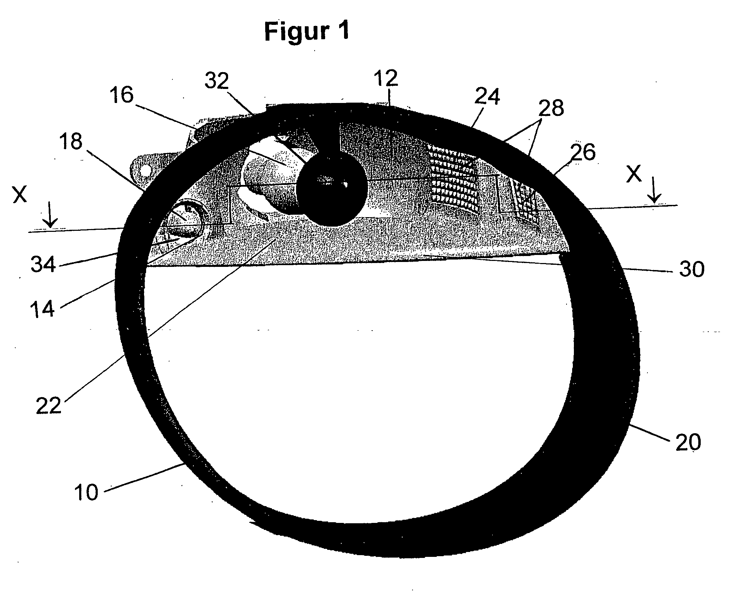

Figur 1 zeigt ein rahmenartiges Abdeckteil (10), welches in einem nicht dargestellten Gehäuse eines Fahrzeugscheinwerfers angeordnet ist. Das Abdeckteil (10) umgibt einen nicht dargestellten Reflektor für Fahrlicht, einen Reflektor (12) für Blinklicht und einen Reflektor (14) für Positionslicht und ist zwischen den Reflektoren und der in Figur 1 nicht dargestellten Abschlussscheibe angeordnet. Im oberen Bereich des in Figur 1 dargestellten rechten Fahrzeugscheinwerfers (der linke Fahrzeugscheinwerfer ist im Bezug auf die Fahrzeugsymmetrieachse spiegelbildlich ausgebildet) ist der Reflektor (12) für Blinklicht und der Reflektor (14) für Positionslicht angeordnet, wobei diese beiden Reflektoren (12,14) gegenüber dem nicht dargestellten Reflektor für Fahrlicht mittels eines Steges (30) abgetrennt sind. Im Scheitelbereich des Reflektors (12) ist in einer Aufnahmeöffnung eine Lichtquelle (16) für Blinklicht angeordnet, welche in Hauptabstrahlrichtung teilweise durch eine Strahlenblende (32) abgedeckt ist, die einstückig mit dem Abdeckteil (10) ausgeführt ist. Die Lichtquelle (18) für Positionslicht ist in dem Gehäuse des Fahrzeugscheinwerfers angeordnet und ragt durch eine Ausnehmung (34) des Abdeckteils (10) hindurch deren Randbereich den Reflektor (14) für die Lichtquelle (18) bildet. Die Lichtquelle (18) für Positionslicht ist in einer Ebene zwischen der Lichtquelle (16) für Blinklicht und der nicht dargestellten Abschlussscheibe und zur Fahrzeugaußenseite hin versetzt in dem Fahrzeugscheinwerfer angeordnet. An der zur Fahrzeugsymmetrieachse weisenden Fläche des oberen Teiles des Fahrzeugscheinwerfers ist ein erster und ein zweiter kleinerer Bereich (24,26) angeordnet, welcher jeweils mit optischen Elementen (28) in Form von Prismen belegt ist. Der erste kleinere Bereich (24) ist, optisch der Lichtquelle (16) für Blinklicht und der zweite kleinere Bereich (26) ist optisch der Lichtquelle (18) für Positionslicht zugeordnet. Der größere Bereich (20) des Abdeckteils (10), welcher die Reflektoren umrahmt und die Strahlenblende (32) bildet, ist mit einer schwarzen Oberflächenbeschichtung und der kleinere Bereich (22), welcher den Reflektor (14) für Positionslicht, den Steg (30), den ersten und den zweiten kleineren Bereich (24,26) bildet, ist mit einer hochglänzenden Oberflächenbeschichtung belegt.

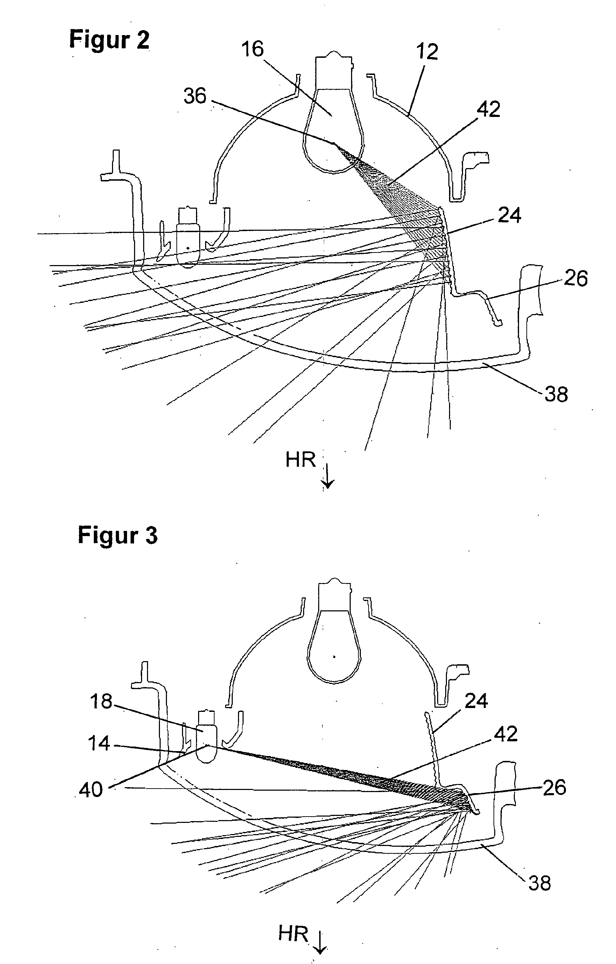

Figur 2 zeigt schematisch den Verlauf der vom Brennpunkt (36) der Lichtquelle (16) für Blinklicht ausgehenden und auf den ersten kleineren Bereich (24) treffenden Lichtstrahlen (42). Die Lichtstrahlen (42) werden durch den mit Prismen belegten ersten kleineren Bereich (24) in Bereiche umgelenkt, die in einem großen Winkel im Bezug auf die Hauptabstrahlrichtung (HR) des Fahrzeugscheinwerfers liegen. Da der Reflektor (12) für Blinklicht sehr weit hinter der Abschlussscheibe (38) angeordnet ist, können weder direkt von der Lichtquelle (16) ausgehende, noch von dem Reflektor (12) umgelenkte Lichtstrahlen in diese großen Winkelbereiche gelangen, die für die gesetzlich vorgeschrieben Lichtverteilung eines Fahrzeugscheinwerfers notwendig sind.
Figur 3 zeigt schematisch den Verlauf der vom Brennpunkt (40) der Lichtquelle (18) für Positionslicht ausgehenden und auf den zweiten kleineren Bereich (26) treffenden Lichtstrahlen (42). Die Lichtstrahlen (42) werden durch den mit Prismen belegten zweiten kleineren Bereich (26) in Bereiche umgelenkt, die in einem großen Winkel im Bezug auf die Hauptabstrahlrichtung (HR) des Fahrzeugscheinwerfers liegen. Da der Reflektor (14) für Blinklicht sehr klein und die Lichtquelle (18) in einem Randbereich des Fahrzeugscheinwerfers angeordnet ist, können weder direkt von der Lichtquelle (18) ausgehende, noch von dem Reflektor (14) umgelenkte Lichtstrahlen in diese großen Winkelbereiche gelangen, die für die gesetzlich vorgeschrieben Lichtverteilung eines Fahrzeugscheinwerfers notwendig sind.
Wie aus Figur 2 und Figur 3 gut ersichtlich ist, sind der erste kleinere Bereich (24) und der zweite kleinere Bereich (26) derart versetzt an dem Abdeckteil angeordnet, dass sie jeweils nur die, von der ihnen zugeordneten Lichtquelle (16,18) abgestrahlten Lichtstrahlen (42) umlenken können.

### Bezugszeichenliste:

- 10: Abdeckteil
- 12: Reflektor
- 14: Reflektor
- 16: Lichtquelle
- 18: Lichtquelle
- 20: Bereich
- 22: Bereich
- 24: erster kleinerer Bereich
- 26: zweiter kleinerer Bereich
- 28: optisches Element
- 30: Steg
- 32: Strahlenblende
- 34: Ausnehmung
- 36: Brennpunkt
- 38: Abschlussscheibe
- 40: Brennpunkt
- 42: Lichtstrahlen
- HR: Hauptabstrahlrichtung

## Patentansprüche

1. Fahrzeugscheinwerfer mit einem Gehäuse, einer das Gehäuse abdeckenden lichtdurchlässigen Abschlussscheibe (38), zumindest einem in dem Gehäuse angeordneten Reflektor für Fahrlicht, zumindest einem zweiten in dem Gehäuse angeordneten Reflektor (12) für Blinklicht, zumindest einem dritten in dem Gehäuse angeordneten Reflektor (14) für Positionslicht, den Reflektoren jeweils zugeordneten Lichtquellen (16,18) und einem die Reflektoren in Abstrahlrichtung umgebenden rahmenartigen Abdeckteil (10), **dadurch gekennzeichnet, dass** das rahmenartige Abdeckteil (10) mehrere Bereiche (20,22) mit unterschiedlichem Reflexionsgrad aufweist, von denen die größeren Bereiche (20) eine Oberfläche mit einem niedrigen Reflexionsgrad und die kleineren Bereiche (22), von denen zumindest ein erster kleinerer Bereich (24) lichttechnisch der Lichtquelle (16) für Blinklicht und zumindest ein zweiter kleinerer Bereich (26) lichttechnisch der Lichtquelle (18) für Positionslicht zugeordnet ist und die das von den jeweiligen Lichtquellen (16,18) auf sie auftreffende Licht in Richtungen umlenken, die in einem großen Winkel im Bezug auf die Hauptabstrahlrichtungen (HR) der Reflektoren (12,14) liegen, eine Oberfläche mit einem hohen Reflexionsgrad aufweisen.

2. Fahrzeugscheinwerfer nach Anspruch 1, **dadurch gekennzeichnet, dass** der erste und/oder der zweite kleinere Bereich (24,26) des rahmenartigen Abdeckteils (10) optische Elemente (28) wie z.B. Prismen oder dergleichen aufweist.

3. Fahrzeugscheinwerfer nach einem der vorstehenden Ansprüche, **dadurch gekennzeichnet, dass** der erste und der zweite kleinere Bereich (24,26) an einer zur Fahrzeugsymmetrieebene liegenden Seitenfläche des rahmenartigen Abdeckteils (10) angeordnet ist.

4. Fahrzeugscheinwerfer nach einem der vorstehenden Ansprüche, **dadurch gekennzeichnet, dass** der zweite kleinere Bereich (26) zwischen dem ersten kleineren Bereich (24) und der Abschlussscheibe (38) und gegenüber dem ersten kleineren Bereich (24) in Richtung der Fahrzeugsymmetrieebene versetzt an dem rahmenartigen Abdeckteil (10) angeordnet ist.

5. Fahrzeugscheinwerfer nach einem der vorstehenden Ansprüche, **dadurch gekennzeichnet, dass** die Lichtquelle (18) für Positionslicht in einer Ebene zwischen der Abschlussscheibe (38) und der Lichtquelle (16) für Blinklicht, sowie versetzt in Richtung einer Seitenfläche des rahmenartigen Abdeckteils (10) angeordnet ist.

6. Fahrzeugscheinwerfer nach einem der vorstehenden Ansprüche, **dadurch gekennzeichnet, dass** die Lichtquelle (18) für Positionslicht in einer den Reflektor (14) für Positionslicht bildenden Ausnehmung (34) des rahmenartigen Abdeckteils (10) angeordnet ist, welche ebenfalls eine Oberfläche mit einem hohen Reflexionsgrad aufweist.

7. Fahrzeugscheinwerfer nach einem der vorstehenden Ansprüche, **dadurch gekennzeichnet, dass** die Oberfläche der größeren Bereiche (20) des rahmenartigen Abdeckteils (10) schwarz und die Oberfläche der kleineren Bereiche (22) hochglanzbedampft ausgeführt ist.

8. Fahrzeugscheinwerfer nach einem der vorstehenden Ansprüche, **dadurch gekennzeichnet, dass** das rahmenartige Abdeckteil (10) mehrteilig ausgeführt ist.

9. Fahrzeugscheinwerfer nach Anspruch 8, **dadurch gekennzeichnet, dass** die einen unterschiedlichen Reflexionsgrad aufweisenden Bereiche (20,22) des rahmenartigen Abdeckteils (10) miteinander verbindbare Einzelteile sind.
